# EUROPEAN PATENT SPECIFICATION

(11) **EP 2 613 424 B1**
(45) Date of publication and mention of the grant of the patent: **18.05.2016**
(21) Application number: 10856728.0
(22) Date of filing: 03.09.2010
(51) Int. Cl.: H01F 38/14, H02J 5/00, H04B 5/00, H01F 27/34

(54) **WIRELESS POWER TRANSMISSION DEVICE**
VORRICHTUNG FÜR DRAHTLOSLEISTUNGSÜBERTRAGUNG
DISPOSITIF DE TRANSMISSION DE COURANT SANS FIL

(43) Date of publication of application: 10.07.2013
(73) Proprietor: Fujitsu Limited, Kawasaki-shi, Kanagawa 211-8588 (JP)
(72) Inventor: KAWANO, Hiroyasu, Kawasaki-shi Kanagawa 211-8588 (JP); TAGUCHI, Masakazu, Kawasaki-shi Kanagawa 211-8588 (JP); SHIMOKAWA, Satoshi, Kawasaki-shi Kanagawa 211-8588 (JP); UCHIDA, Akiyoshi, Kawasaki-shi Kanagawa 211-8588 (JP); MATSUI, Kiyoto, Kawasaki-shi Kanagawa 211-8588 (JP)
(74) Representative: Fenlon, Christine Lesley
(86) International application number: PCT/JP2010/065167
(87) International publication number: WO 2012/029179

(56) References cited:
- WO-A1-2008/050260
- WO-A1-2009/027674
- WO-A2-2009/122355
- JP-A- 8 037 121
- JP-A- 2006 314 181
- JP-A- 2008 295 274
- JP-A- 2009 164 293
- JP-A- 2009 164 293
- JP-A- 2009 252 970
- US-A- 5 469 036
- US-B1- 6 650 213

## Description

### [Technical Field]

The present invention relates to a power transmission device.

### [Background Art]

Recently, a technology for wirelessly transmitting power (hereinafter, "wireless power transmission technology") such as electromagnetic induction and magnetic resonance has been studied in various ways. The wireless power transmission technology is such that an electromagnetic wave is emitted from a coil inside a power transmission device to a coil inside a power reception device to wirelessly transmit power through the emitted electromagnetic wave.

For example, the wireless power transmission technology using electromagnetic induction includes a technology for providing a mechanism for fixing a position of a power reception device to a power transmission device (cradle mechanism), positioning the power reception device, and performing wireless power transmission.

In the wireless power transmission technology, most of electromagnetic waves emitted from the coil inside the power transmission device are blocked by the power reception device. Meanwhile, the rest of the electromagnetic waves not fully blocked by the power reception device leak into a space. If the electromagnetic waves leaking into the space (hereinafter, "leakage electromagnetic wave") are absorbed by surrounding electronic devices, human bodies, and the like, then the human bodies and the like may be affected thereby. It is particularly known that electromagnetic waves of a given strength or more have negative effects on the human body.

A technology is also known in which a leakage magnetic flux detection coil is provided in a power reception device side, a detection result is fed back to a power transmission device side, and a leakage magnetic flux is reduced by the power transmission device side.

Patent literature 2 discloses a wireless power transmission system comprising a base unit with multiple magnetic field generator circuits and a device, separable from said base unit having a receiving inductor, adapted to receive power inductively when said device is in proximity to one of said generator circuits, wherein said base unit comprises a controller, configured to determine a transmission circuit from said generator circuits when said receiving inductor is in proximity to said transmission circuit, whereupon said transmission circuit is operated to generate a first magnetic field, having a first phase, to induce a current in said receiving inductor and at least one of the remaining generator circuits is operated as a compensation circuit to generate a second magnetic field, having an opposite phase to said first phase.

### [Citation List]

### [Patent Citation]

Patent Literature 1: Japanese Laid-open Patent Publication No. 2008-295274
Patent Literature 2: WO2009/122355A2

### [Summary of Invention]

### [Technical Problem]

As explained above, it is preferable that the electromagnetic waves of a strength with which the human body and the like are negatively affected are prevented from being absorbed into the human body. For example, it is conceivable that the position of the power reception device with respect to the coil inside the power transmission device is adjusted to a predetermined marking position to improve a blockage efficiency of the electromagnetic waves by the power reception device.

In the conventional technology, however, it is difficult to sufficiently suppress the influence of the electromagnetic waves on the surroundings. Specifically, in the conventional technology in which the position of the power reception device is adjusted, if the power reception device is displaced by even a slight amount from the marking position, the leakage electromagnetic wave becomes larger than a reference value, and this may cause negative effects on surrounding electronic devices, human bodies, and the like.

Furthermore, the technology disclosed in Patent Literature 1 requires an additional configuration to be provided in the power reception device side, which causes a cost problem.

The disclosed technology has been made to solve the problems of the conventional technology, and it is an object of the present invention to provide a power transmission device capable of sufficiently suppressing the influence of electromagnetic waves on the surroundings.

### [Solution to Problem]

To solve the above-described problem and achieve the object, a power transmission device for wirelessly transmitting power to a power reception device disclosed in the present application is defined in claim 1.

### [Brief Description of Drawings]

FIG. 1 is a diagram of a schematic configuration of a power transmission and reception system including a power transmission device according to a first embodiment.
FIG. 2 is a plan view of a power transmission coil when viewed from a power reception coil side.
FIG. 3 is a plan view of the power reception coil when viewed from the power transmission coil side.
FIG. 4 is a diagram for explaining an example of a change (part 1) in an electromagnetic-wave strength distribution produced by an arrangement of correction coils.
FIG. 5 is an enlarged view of a portion P in FIG. 4.
FIG. 6 is a diagram for explaining an example of a change (part 2) in the electromagnetic-wave strength distribution produced by an arrangement of correction coils.
FIG. 7 is an enlarged view of a portion Q in FIG. 6.
FIG. 8 is a diagram for explaining an example of a change (part 3) in the electromagnetic-wave strength distribution produced by an arrangement of correction coils.
FIG. 9 is an enlarged view of a portion R in FIG. 8.
FIG. 10 is a plan view illustrating an arrangement example 1 of correction coils.
FIG. 11 is a side view of FIG. 10.
FIG. 12 is a plan view illustrating an arrangement example 2 of correction coils.
FIG. 13 is a side view of FIG. 12.
FIG. 14 is a diagram of a schematic configuration of a power transmission and reception system including a power transmission device according to a second embodiment.
FIG. 15 is a diagram for explaining an example of a change in an electromagnetic-wave strength distribution produced by an arrangement of correction coils.
FIG. 16 is an enlarged view of a portion S in FIG. 15.
FIG. 17 is a plan view illustrating an arrangement example 1 of correction coils.
FIG. 18 is a plan view illustrating an arrangement example 2 of correction coils.

### [Embodiment for Carrying Out the Invention]

Exemplary embodiments of the power transmission device disclosed in the present application will be explained in detail below with reference to the accompanying drawings. It is noted that the present invention is not limited by the embodiments.

### First Embodiment

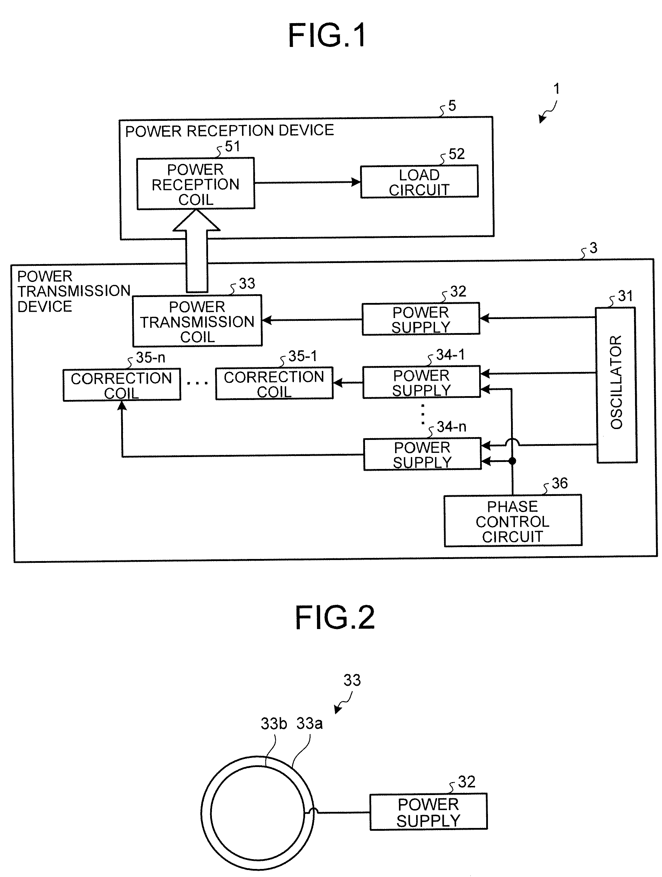

First of all, the configuration of a power transmission and reception system including a power transmission device according to a first embodiment will be explained below with reference to FIG. 1. FIG. 1 is a diagram of a schematic configuration of the power transmission and reception system including the power transmission device according to the first embodiment. A power transmission and reception system 1 illustrated in FIG. 1 includes a power transmission device 3 and a power reception device 5. In the power transmission and reception system 1, power is transmitted as electromagnet energy from the power transmission device 3 to the power reception device 5. Hereinafter, the electromagnet energy may be called "electromagnetic wave".

The power transmission device 3 includes an oscillator 31, a power supply 32, a power transmission coil 33, power supplies 34-1 to 34-n, correction coils 35-1 to 35-n, and a phase control circuit 36, which are provided inside thereof. The power reception device 5 includes a power reception coil 51 and a load circuit 52, which are provided inside thereof.

Among these components, the oscillator 31 oscillates a predetermined frequency signal and inputs the oscillated frequency signal to the power supply 32 and the power supplies 34-1 to 34-n. The power supply 32 outputs an alternating current of a frequency corresponding to the frequency signal input from the oscillator 31 to the power transmission coil 33. The power supplies 34-1 to 34-n output alternating currents of a frequency corresponding to the frequency signal input from the oscillator 31 to the correction coils 35-1 to 35-n respectively.

The power transmission coil 33 is a coil for emitting electromagnetic waves to the power reception coil 51. A configuration example of the power transmission coil 33 is illustrated in FIG. 2. FIG. 2 is a plan view of the power transmission coil 33 when viewed from the power reception coil 51 side. As illustrated in FIG. 2, the power transmission coil 33 includes a magnetic resonance coil 33a and a power supply coil 33b.

The magnetic resonance coil 33a is an LC resonant circuit, and functions as a magnetic resonance coil that generates magnetic resonance between the magnetic resonance coil 33a and a magnetic resonance coil 51a, which is explained later, of the power reception coil 51. A capacitor component of the LC resonant circuit may be implemented by an element, or may be implemented by stray capacitance occurring at the two open ends of the coil.

The power supply coil 33b is a power transmitting and receiving unit that is connected to the power supply 32 and supplies power obtained from the power supply 32 to the magnetic resonance coil 33a by electromagnetic induction. The arrangement of the power supply coil 33b and the magnetic resonance coil 33a is determined based on a distance and an arrangement that allow electromagnetic induction to be generated.

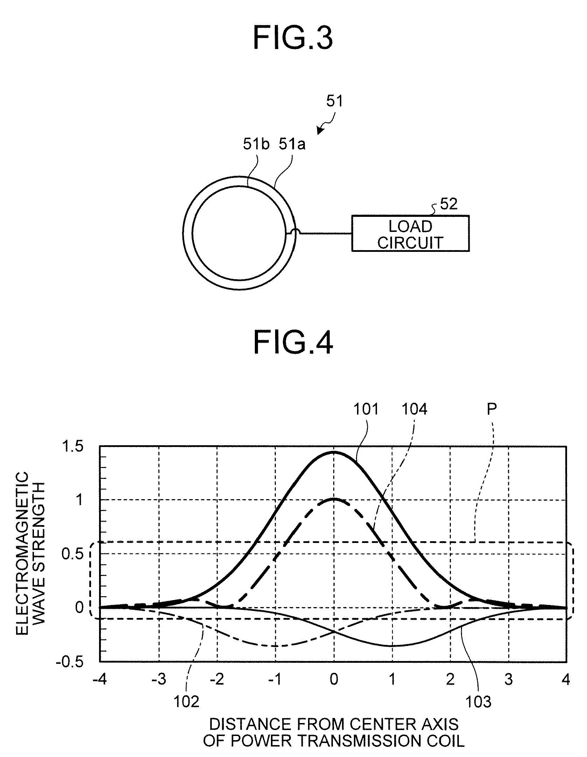

The power reception coil 51 is a coil for receiving an electromagnetic wave emitted from the power transmission coil 33. A configuration example of the power reception coil 51 is illustrated in FIG. 3. FIG. 3 is a plan view of the power reception coil 51 when viewed from the power transmission coil 33 side. As illustrated in FIG. 3, the power reception coil 51 includes a magnetic resonance coil 51a and a power pickup coil 51b.

The magnetic resonance coil 51a is an LC resonant circuit, and functions as a magnetic resonance coil that generates magnetic resonance between the magnetic resonance coil 51a and the magnetic resonance coil 33a. A capacitor component of the LC resonant circuit may be implemented by an element, or may be implemented by stray capacitance occurring at the two open ends of the coil.

When a resonance frequency of the magnetic resonance coil 33a and a resonance frequency of the magnetic resonance coil 51a are close enough to each other, magnetic resonance occurs between the magnetic resonance coil 33a and the magnetic resonance coil 51a. When the magnetic resonance occurs, then electromagnet energy can be transmitted from the magnetic resonance coil 33a to the magnetic resonance coil 51a.

The power pickup coil 51b is arranged at a position where electromagnetic induction occurs between the power pickup coil 51b and the magnetic resonance coil 51a. When the resonance causes the magnetic resonance coil 51a to magnetically resonate, energy is transmitted from the magnetic resonance coil 51a to the power pickup coil 51b by the electromagnetic induction. The power pickup coil 51b is electrically connected to the load circuit 52, and the energy transmitted to the power pickup coil 51b by the electromagnetic induction is provided as power to the load circuit 52. An arbitrary circuit can be used as the load circuit 52 and therefore, for example, any battery may be used.

In this way, in the power transmission and reception system 1, as a result of occurrence of the electromagnetic induction and the magnetic resonance, the power of the power supply 32 is emitted in the form of electromagnetic waves from the power transmission coil 33 to the power reception coil 51, and is finally supplied to the load circuit 52.

Most of the electromagnetic waves emitted from the power transmission coil 33 to the power reception coil 51 are blocked by the power reception device 5. Meanwhile, the rest of the electromagnetic waves not fully blocked by the power reception device 5 leak into a space. The electromagnetic waves leaking into the space (hereinafter, "leakage electromagnetic wave") may negatively affect the surrounding electronic devices, human bodies, and the like. In the conventional technology in which the leakage magnetic flux detection coil is provided in the power reception device side, the detection result is fed back to the power transmission device side, and the leakage magnetic flux is reduced by the power transmission device side, the leakage electromagnetic wave occurs in a period from detecting an increase in the strength of the magnetic flux to completing adjustment of a voltage applied to the coil, and this may exert the influence on the surrounding electronic devices, human bodies, and the like.

Therefore, the power transmission device 3 according to the present embodiment is configured to reduce the leakage electromagnetic wave by providing the correction coils 35-1 to 35-n at predetermined positions of the power transmission device 3. Referring back to the explanation of FIG. 1, the explanation of the correction coils 35-1 to 35-n and so on will be continued. In the following case in which there is no need to particularly discriminate the correction coils 35-1 to 35-n from one another, the correction coils 35-1 to 35-n are simply written as "correction coil(s) 35".

The correction coils 35 are arranged in the power transmission coil 33 so that a center axis of the power transmission coil 33 and a center axis of each of their own coils do not overlap each other. The correction coil 35 emits an electromagnetic wave (hereinafter, "second electromagnetic wave") being a strength distribution with a polarity opposite to that of the electromagnetic wave (hereinafter, "first electromagnetic wave") emitted from the power transmission coil 33 to the power reception coil 51 based on electric currents input from the power supplies 34-1 to 34-n.

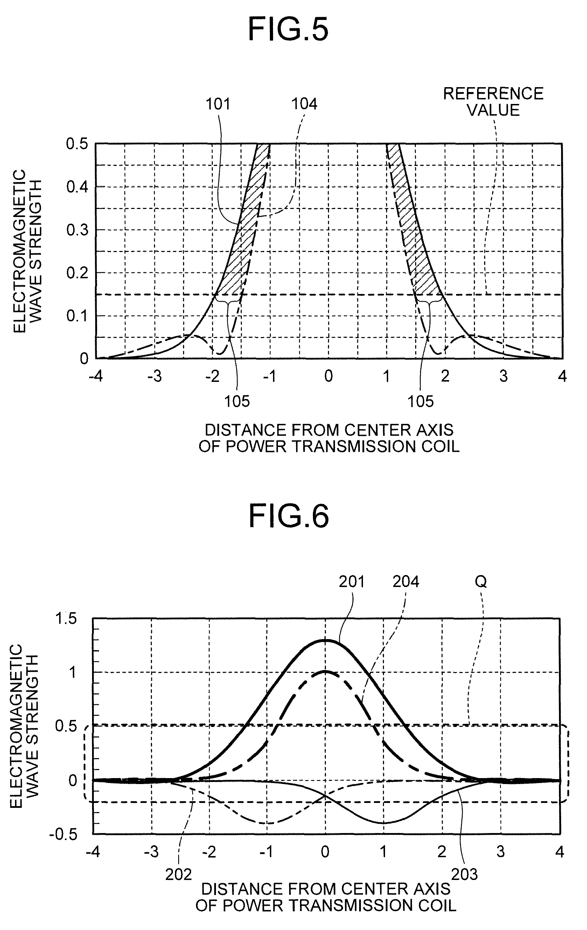

A change in an electromagnetic-wave strength distribution occurring due to an arrangement of the correction coils 35 will be explained below with reference to FIG. 4 to FIG. 9. FIG. 4 is a diagram for explaining an example of a change (part 1) in an electromagnetic-wave strength distribution produced by an arrangement of the correction coils 35. The horizontal axis of FIG. 4 represents a distance from the center axis "0" of the power transmission coil 33, and the vertical axis of FIG. 4 represents electromagnetic wave strength. The horizontal axis also represents a value after the distance is normalized based on a radius of the power transmission coil 33 set to 1. In the present embodiment, the radius of the power transmission coil 33 is set to 25 mm. Although the normalized value will be explained based on the radius of the correction coil 35 set to 25 mm in the present embodiment, there is no need to be the same diameter as that of the power transmission coil 33. In the present embodiment, the electromagnetic wave will be explained assuming that there is a high possibility of having negative effects on the human body and so on, for example, if magnetic field strength is 0.15 A/m or more and electric field strength is 61 V/m or more at 13.56 MHz. Moreover, in the present embodiment, the electromagnetic wave strength indicates magnetic field strength. This is because the direction in which wireless power feeding is performed on the power reception device is a direction that goes through the power transmission coil 33; however, the magnetic field strength is dominant in this direction, whereas the electric field strength is negligible therein. FIG. 5 is an enlarged view of a portion P in FIG. 4.

As illustrated in FIG. 4, a strength distribution 101 of the first electromagnetic wave emitted from the power transmission coil 33 becomes a Gaussian distribution in which the strength becomes its peak value at the center axis "0" of the power transmission coil 33 and reduces with separation from the center axis "0" of the power transmission coil 33. FIG. 4 is a diagram represented based on a dispersion value which is σ²=1. In the example of FIG. 4, the correction coil 35 is arranged at a position separated from the center axis "0" of the power transmission coil 33 by a distance corresponding to ±1×σ so that the center axis "0" of the power transmission coil 33 and the center axis of the correction coil 35 do not overlap each other. The position where the correction coil 35 is arranged is not limited to the position separated from the center axis "0" of the power transmission coil 33 by the distance corresponding to ±1×σ. The position may be any position if the center axis "0" of the power transmission coil 33 and the center axis of the correction coil 35 do not overlap each other.

Reference sign 104 of FIG. 4 represents a normalized distribution so that a maximum value of the electromagnetic wave strength becomes "1". When the power transmission coil 33 has an equal output, then outputs of the correction coil 35 are controlled so as to obtain an expected strength of synthesized electromagnetic waves.

The correction coils 35 then emit second electromagnetic waves being strength distributions 102 and 103 each with a polarity opposite to that of the strength distribution 101 of the first electromagnetic wave. The strength distributions 102 and 103 of the second electromagnetic waves have Gaussian distributions each with the dispersion value σ²=1, which is the same as the first electromagnetic wave distribution. The correction coils 35 emit the strength distributions each with the opposite polarity, and this causes parts of the first electromagnetic wave to be cancelled out by the second electromagnetic waves. And, as illustrated in FIG. 5, in a strength distribution 104 obtained by synthesizing the strength distribution 101 of the first electromagnetic wave with the strength distributions 102 and 103 of the second electromagnetic waves, a range exceeding a predetermined reference value in a distance direction from the center axis of the power transmission coil 33 is reduced as compared with the strength distribution 101 of the first electromagnetic wave. Namely, the power transmission device 3 can reduce the leakage electromagnetic wave exceeding the predetermined reference value by a portion corresponding to an area 105 that is enclosed by the strength distribution 101, the curve 104, and the line of the reference value.

In other words, when the correction coil 35 is not provided, the electromagnetic wave exceeding the reference value is emitted to a space through wireless power transmission if no power reception device being an obstacle of the electromagnetic wave is disposed in a range from -2 to 2 in the distance direction from the center axis of the power transmission coil 33. However, when the correction coil 35 is provided, as illustrated in FIG. 5, the electromagnetic wave exceeding the reference value is prevented from being emitted to a space if a power reception device is disposed in a range from -1.5 to 1.5 in the distance direction from the center axis of the power transmission coil 33. Therefore, even if the wireless power feeding is performed while no power reception device is present in a range between -2 and -1.5 or between 1.5 and 2, the leakage electromagnetic wave exceeding the reference value is not emitted.

When the diameter of the power transmission coil 33 is set to 25 mm in the present embodiment, the wireless power feeding can be performed while no power reception device is present in a range of 0.5, i.e. 6 mm on the horizontal axis.

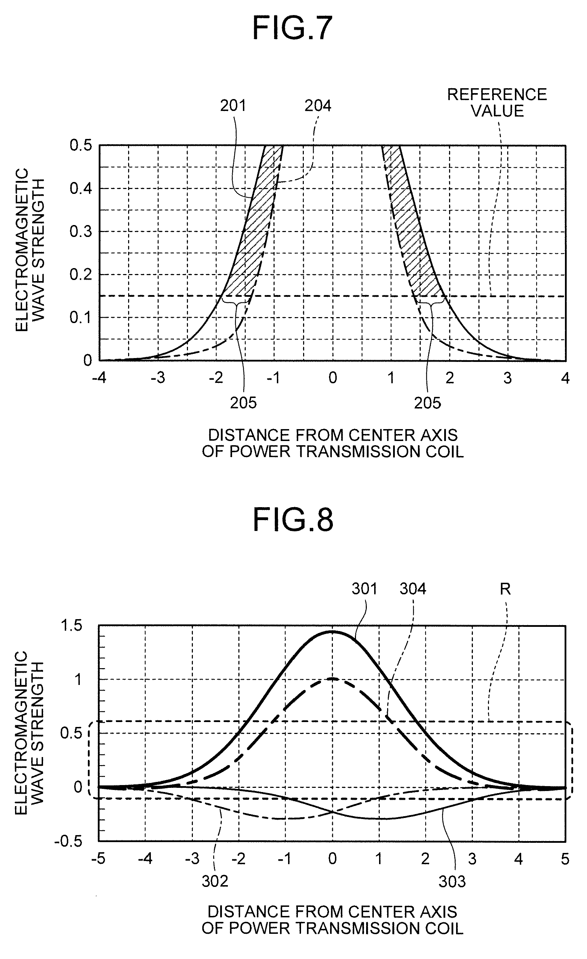

FIG. 6 is a diagram for explaining an example of a change (part 2) in the electromagnetic-wave strength distribution produced by an arrangement of the correction coils 35. FIG. 7 is an enlarged view of a portion Q in FIG. 6. FIG. 6 is an example of changing strength distributions of the first electromagnetic wave and the second electromagnetic waves in FIG. 4 from the dispersion value σ²=1 to a dispersion value σ²=0.5. Reference sign 204 of FIG. 6 represents a normalized distribution so that a maximum value of the electromagnetic wave strength becomes "1". When the power transmission coil has an equal output, then outputs of the correction coil are controlled so as to obtain an expected strength of synthesized electromagnetic waves. Outputs (voltage and electric current) to each of the coils are the same values as these of FIG. 4.

In the example of FIG. 6, the correction coil 35 is arranged at a position separated from the center axis "0" of the power transmission coil 33 by the distance corresponding to ±1×σ so that the center axis "0" of the power transmission coil 33 and the center axis of the correction coil 35 do not overlap each other. The dispersion value when the arrangement position of the correction coils 35 is determined is set to the dispersion value σ²=1. The correction coils 35 then emit second electromagnetic waves being strength distributions 202 and 203 each with a polarity opposite to that of a strength distribution 201 of a first electromagnetic wave. This causes parts of the first electromagnetic wave to be cancelled out by the second electromagnetic waves, and, as illustrated in FIG. 7, the width of the strength distribution 201 of the first electromagnetic wave is reduced to the width indicated by the curve 204. This enables the power transmission device 3 to reduce the leakage electromagnetic wave exceeding a predetermined reference value by a portion corresponding to an area 205 that is enclosed by the strength distribution 201, the curve 204, and the line of the reference value.

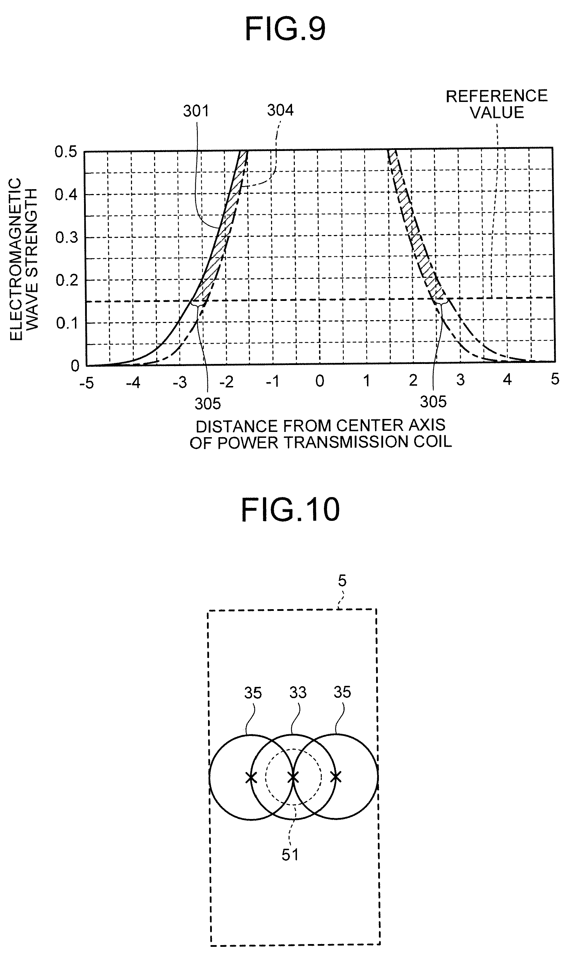

FIG. 8 is a diagram for explaining an example of a change (part 3) in the electromagnetic-wave strength distribution produced by an arrangement of the correction coils 35. FIG. 9 is an enlarged view of a portion R in FIG. 8. FIG. 8 is an example of changing strength distributions of the first electromagnetic wave and the second electromagnetic waves in FIG. 4 from the dispersion value σ²=1 to a dispersion value σ²=2. FIG. 8 is an example in which when the dispersion value σ² in the strength distributions of the second electromagnetic waves in FIG. 4 is set to 1, then the dispersion value σ² in the strength distributions of the second electromagnetic waves is changed to 2. Reference sign 304 of FIG. 8 represents a normalized distribution so that a maximum value of the electromagnetic wave strength becomes "1". When the power transmission coil has an equal output, then outputs of the correction coil are controlled so as to obtain an expected strength of synthesized electromagnetic waves. Outputs (voltage and electric current) to each of the coils are the same values as these of FIG. 4 and FIG. 6.

In the example of FIG. 8, the correction coil 35 is arranged at a position separated from the center axis "0" of the power transmission coil 33 by the distance corresponding to ±1×σ so that the center axis "0" of the power transmission coil 33 and the center axis of the correction coil 35 do not overlap each other. The position where the correction coil 35 is arranged is not limited to the position separated from the center axis "0" of the power transmission coil 33 by the distance corresponding to ±1×σ. The position may be any position if the center axis "0" of the power transmission coil 33 and the center axis of the correction coil 35 do not overlap each other.

Reference sign 304 of FIG. 8 represents a normalized distribution so that a maximum value of the electromagnetic wave strength becomes "1". When the power transmission coil 33 has an equal output, then outputs of the correction coil 35 are controlled so as to obtain an expected strength of synthesized electromagnetic waves. The correction coils 35 then emit second electromagnetic waves being strength distributions 302 and 303 each with a polarity opposite to that of a strength distribution 301 of the first electromagnetic wave. The correction coils 35 emit the strength distributions each with the opposite polarity, and this causes parts of the first electromagnetic wave to be cancelled out by the second electromagnetic waves. And, as illustrated in FIG. 9, in a strength distribution 304 obtained by synthesizing the strength distribution 301 of the first electromagnetic wave with the strength distributions 302 and 303 of the second electromagnetic waves, a range exceeding a predetermined reference value in a distance direction from the center axis of the power transmission coil 33 is reduced as compared with the strength distribution 301 of the first electromagnetic wave. Namely, the power transmission device 3 can reduce the leakage electromagnetic wave exceeding the predetermined reference value by a portion corresponding to an area 305 smaller than the area 105 in FIG. 5.

Referring back to the explanation of FIG. 1, the phase control circuit 36 controls so that the current flowing through the power transmission coil 33 and the current flowing through the correction coil 35 become mutually opposite phases. Specifically, the phase control circuit 36 inverts the phase of the alternating currents output from the power supplies 34-1 to 34-n to the phase of the alternating current output from the power supply 32 by 180°, so that these two alternating currents are controlled so as to become mutually opposite phases. The currents, inverted by 180°, output from the power supplies 34-1 to 34-n are provided to the correction coils 35-1 to 35-n respectively, and the correction coils 35-1 to 35-n emit the second electromagnetic waves being strength distributions each with a polarity opposite to that of the first electromagnetic wave based on the provided currents. Even if there is not a 180° phase difference between the phases, the phase of the current flowing through the correction coil may be any phase in which an electromagnetic wave for reducing an electromagnetic wave generated by the power transmission coil is generated.

Then, arrangements of the correction coils 35 will be explained below with reference to FIG. 10 to FIG. 13. As already explained, the correction coils 35 are arranged in the power transmission coil 33 so that the center axis of the power transmission coil 33 and the center axis of each of their own coils do not overlap each other.

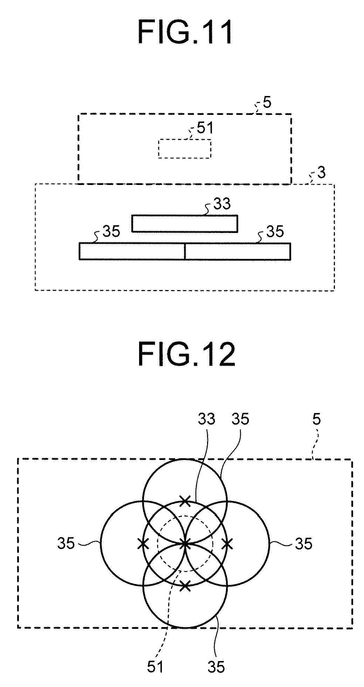

FIG. 10 is a plan view illustrating an arrangement example 1 of the correction coils 35. FIG. 11 is a side view of FIG. 10. In the examples of FIG. 10 and FIG. 11, two correction coils 35 are arranged close to the power transmission coil 33 so that the periphery of the power transmission coil 33 and respective center axes of their own coils overlap each other. The two correction coils 35 emit second electromagnetic waves being the strength distributions each with a polarity opposite to the first electromagnetic wave emitted from the power transmission coil 33. Thereby, particularly two portions positioned close to overlapping portions between the periphery of the power transmission coil 33 and the center axes of the two correction coils 35 in the first electromagnetic wave are cancelled out by the second electromagnetic waves.

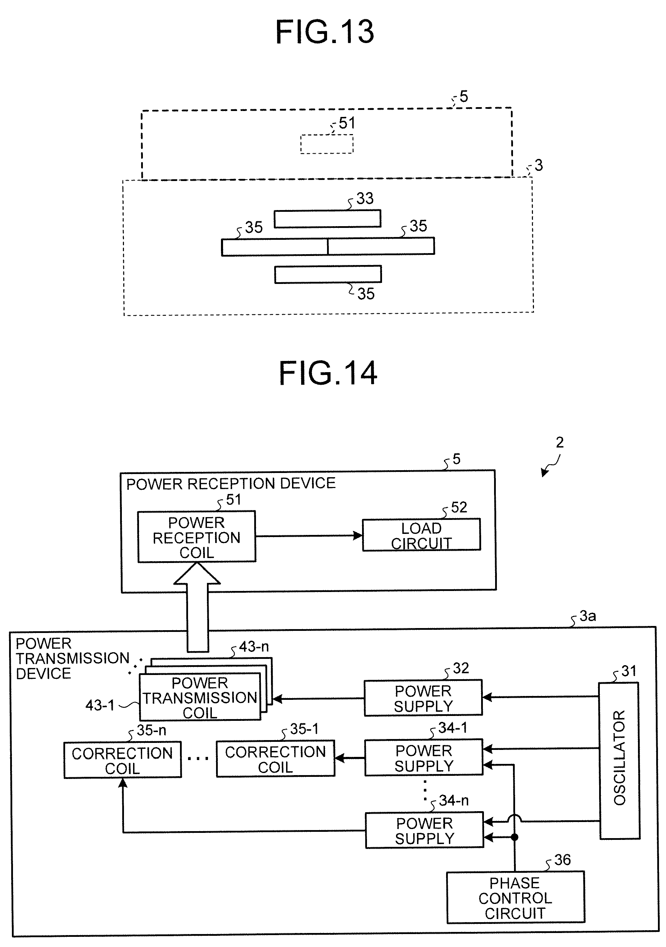

FIG. 12 is a plan view illustrating an arrangement example 2 of the correction coils 35. FIG. 13 is a side view of FIG. 12. In the examples of FIG. 12 and FIG. 13, four correction coils 35 are arranged close to the power transmission coil 33 so that the periphery of the power transmission coil 33 and respective center axes of their own coils overlap each other. The four correction coils 35 emit second electromagnetic waves being the strength distributions each with a polarity opposite to that of the first electromagnetic wave emitted from the power transmission coil 33. Thereby, particularly four portions positioned close to overlapping portions between the periphery of the power transmission coil 33 and the center axes of the four correction coils 35 in the first electromagnetic wave are cancelled out by the second electromagnetic waves.

As explained above, the power transmission device 3 according to the first embodiment is configured to arrange the power transmission coil 33 for emitting the first electromagnetic wave to the power reception coil 51 of the power reception device 5 and the correction coils 35 for emitting the second electromagnetic waves being the strength distributions each with the polarity opposite to that of the first electromagnetic wave so that their center axes are displaced from one another. Therefore, according to the first embodiment, parts of the first electromagnetic wave can be cancelled out by the second electromagnetic waves, and the leakage electromagnetic wave can thereby be reduced. As a result, the influence of the electromagnetic waves on the surrounding electronic devices, human bodies, and the like can be reduced.

In the power transmission device 3 according to the first embodiment, the phase control circuit 36 controls so as to make the current flowing through the power transmission coil 33 and the current flowing through the correction coil 35 be mutually opposite phases, and the correction coil 35 emits the second electromagnetic wave based on the current after the phase is controlled. Therefore, according to the first embodiment, the second electromagnetic wave being the strength distribution with the polarity opposite to that of the first electromagnetic wave can be easily generated.

In the power transmission device 3 according to the first embodiment, the correction coils 35 are arranged close to the power transmission coil 33 so that the periphery of the power transmission coil 33 and respective center axes of their own coils overlap each other. Therefore, according to the first embodiment, particularly the portions positioned close to the overlapping portions between the periphery of the power transmission coil 33 and the center axes of the correction coils 35 in the first electromagnetic wave can be cancelled out by the second electromagnetic waves.

The first embodiment is configured to generate the second electromagnetic waves being the strength distributions each with the polarity opposite to that of the first electromagnetic wave by controlling the current flowing through the power transmission coil 33 and the current flowing through the correction coil 35 become mutually opposite phases; however, a method of generating the second electromagnetic wave is not limited thereto. For example, by forming the power transmission coil 33 and the correction coil 35 so as to be reversely wound to each other, the second electromagnetic wave can be generated. In this configuration, however, the phase control circuit 36 as illustrated in FIG. 1 is omitted.

The second electromagnetic wave can also be generated by separately providing an adjusting unit for adjusting the direction of a current flowing through the power transmission coil 33 and the direction of a current flowing through the correction coil 35 so as to be different from each other.

### Second Embodiment

FIG. 14 is a diagram of a schematic configuration of a power transmission and reception system including a power transmission device according to a second embodiment. A power transmission and reception system 2 illustrated in FIG. 14 includes a power transmission device 3a and the power reception device 5. The same signs are assigned to components same as the components already explained in FIG. 1 and therefore explanation thereof is omitted in the followings.

The power transmission device 3a illustrated in FIG. 14 includes a plurality of power transmission coils 43-1 to 43-n instead of the power transmission coil 33. Each of the power transmission coils 43-1 to 43-n has the same configuration as that of the power transmission coil 33. In the following case in which there is no need to particularly discriminate the power transmission coils 43-1 to 43-n from one another, the power transmission coils 43-1 to 43-n are simply written as "power transmission coil(s) 43".

Each of the correction coils 35 is arranged close to an outer coil so that the periphery of the outer coil, among the power transmission coils 43, positioned at an outermost location and each of the center axes of their own coils overlap each other. When receiving a current from each of the power supplies 34-1 to 34-n, then the correction coil 35 emits a second electromagnetic wave being a strength distribution with a polarity opposite to that of the first electromagnetic wave emitted from the power transmission coil 43 to the power reception coil 51.

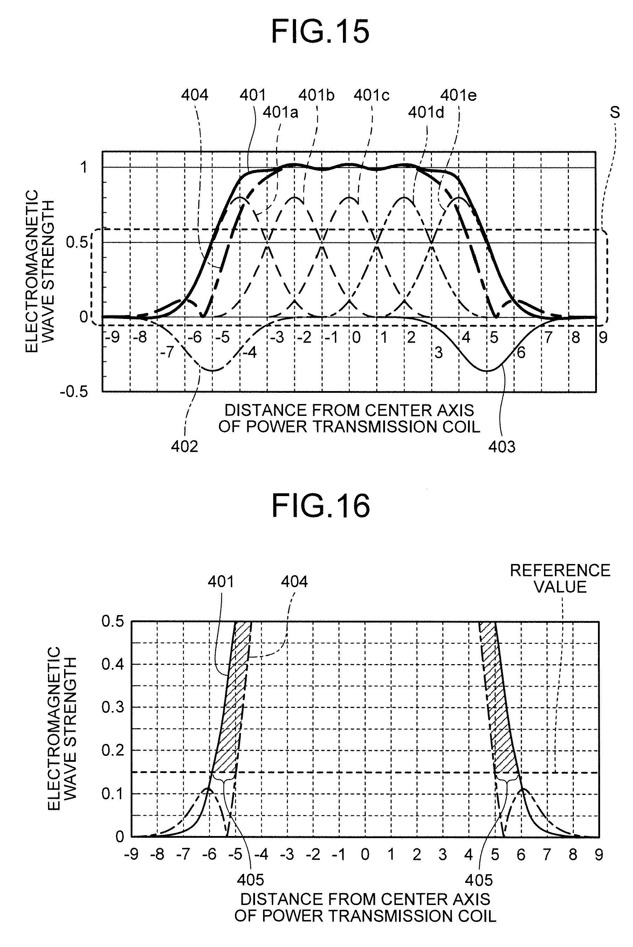

A change in an electromagnetic-wave strength distribution occurring due to an arrangement of the correction coils 35 will be explained below with reference to FIG. 15 to FIG. 16. FIG. 15 is a diagram for explaining an example of a change in an electromagnetic-wave strength distribution produced by an arrangement of the correction coils 35. The horizontal axis of FIG. 15 represents a distance from the center axis "0", "±2", and "±4" of five power transmission coils 43, and the vertical axis of FIG. 15 represents electromagnetic wave strength. The horizontal axis also represents a value after the distance is normalized based on a radius of the power transmission coil 33 set to 1. In the present embodiment, although the change is explained based on the radius of the correction coil 35 set to 25 mm, there is no need to be the same diameter as that of the power transmission coil 33. In the present embodiment, the electromagnetic wave strength will be explained below assuming that there is a high possibility of having negative effects on the human body and so on, for example, if magnetic field strength is 0.15 A/m or more and electric field strength is 61 V/m or more at 13.56 MHz. Moreover, in the present embodiment, the electromagnetic wave strength indicates magnetic field strength. This is because the direction in which wireless power feeding is performed on the power reception device is a direction that goes through the power transmission coil 33; however, the magnetic field strength is dominant in this direction, whereas the electric field strength is negligible therein. FIG. 16 is an enlarged view of a portion S in FIG. 15.

As illustrated in FIG. 15, a strength distribution 401 of the first electromagnetic wave obtained by synthesizing strength distributions 401a to 401e of electromagnetic waves emitted from the five power transmission coils 43 is a distribution of a trapezoidal shape which is symmetric with respect to the center axis "0" of the power transmission coil 43 at the center thereof. In the example of FIG. 15, each of the correction coils 35 is arranged separated from the center axis "±4" of each of outer coils by the distance corresponding ±1×σ so that the periphery of the outer coil, among the five power transmission coils 43, positioned at an outermost location and the center axis of the correction coil 35 overlap each other. The position where the correction coil 35 is arranged is not limited to the position separated from the center axis "±4" of the power transmission coil 33 by the distance corresponding to ±1×σ. The position may be any position if the center axis "±" of the power transmission coil 33 and the center axis of the correction coil 35 do not overlap each other. The correction coils 35 emit second electromagnetic waves being strength distributions 402 and 403 each with a polarity opposite to the strength distribution 401 of the first electromagnetic wave. The strength distributions 401a to 401e of the electromagnetic waves emitted from the power transmission coils 43 and the strength distributions 402 and 403 of the second electromagnetic waves emitted from the correction coils 35 are assumed to have Gaussian distributions. The correction coils 35 emit the strength distributions each with the opposite polarity, and this causes parts of the first electromagnetic wave to be cancelled out by the second electromagnetic waves. And, as illustrated in FIG. 16, in a strength distribution 404 obtained by synthesizing the strength distribution 401 of the first electromagnetic wave with the strength distributions 402 and 403 of the second electromagnetic waves, a range exceeding a predetermined reference value in a distance direction from the center axis of the power transmission coil 33 is reduced as compared with the strength distribution 401 of the first electromagnetic wave. Namely, the power transmission device 3a can reduce the leakage electromagnetic wave exceeding the predetermined reference value by a portion corresponding to an area 405.

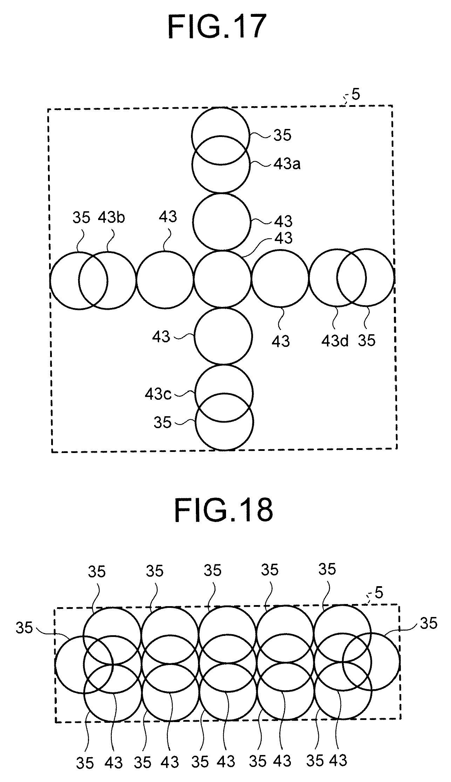

Then arrangement examples of the correction coils 35 will be explained below with reference to FIG. 17 and FIG. 18. As already explained above, each of the correction coils 35 is arranged close to each of the outer coils so that the periphery of the outer coil, among the power transmission coils 43, positioned at the outermost location and the center axis of each of their own coils overlap each other.

FIG. 17 is a plan view illustrating an arrangement example 1 of the correction coils 35. In the example of FIG. 17, four correction coils 35 are arranged close to power transmission coils 43a to 43d so that the peripheries of the power transmission coils 43a to 43d, among nine power transmission coils 43 arranged in a cross shape, which are positioned at outermost locations and the center axes of their own coils overlap each other respectively. The four correction coils 35 emit second electromagnetic waves being strength distributions each with a polarity opposite to that of first electromagnetic waves emitted from the power transmission coils 43. Thereby, particularly the portions positioned close to the overlapping portions between the peripheries of the power transmission coils 43a to 43b and the center axes of the correction coils 35 in the first electromagnetic waves are cancelled out by the second electromagnetic waves respectively.

FIG. 18 is a plan view illustrating an arrangement example 2 of the correction coils 35. In the example of FIG. 18, twelve correction coils 35 are arranged close to the power transmission coils 43 so that the peripheries of linearly arranged five power transmission coils 43 and the center axes of their own coils overlap each other respectively. In the example of FIG. 18, because all the linearly arranged five power transmission coils 43 are positioned at outermost locations, all the five power transmission coils 43 correspond to outer coils. The twelve correction coils 35 emit second electromagnetic waves being strength distributions each with a polarity opposite to that of the first electromagnetic waves emitted from the power transmission coils 43 respectively. Thereby, particularly the portions positioned close to the overlapping portions between the peripheries of the power transmission coils 43 and the center axes of the correction coils 35 in the first electromagnetic waves are cancelled out by the second electromagnetic waves.

As explained above, the power transmission device 3a according to the second embodiment is configured to arrange the correction coils close to the outer coils so that the peripheries of the outer coils, among the power transmission coils 43, positioned at the outermost locations and their own coils overlap each other respectively. Therefore according to the second embodiment, particularly the portions positioned close to the overlapping portions between the peripheries of the outer coils and the center axes of the correction coils 35 in the first electromagnetic waves can be cancelled out by the second electromagnetic waves. As a result, even if the power transmission coils 43 are used, the influence of the electromagnetic waves on the surrounding electronic devices, human bodies, and the like can be reduced.

### [Explanation of Reference]

- 1, 2: POWER TRANSMISSION AND RECEPTION SYSTEM
- 3, 3a: POWER TRANSMISSION DEVICE
- 5: POWER RECEPTION DEVICE
- 31: OSCILLATOR
- 32: POWER SUPPLY
- 33, 43: POWER TRANSMISSION COIL
- 34: POWER SUPPLY
- 35: CORRECTION COIL
- 36: PHASE CONTROL CIRCUIT
- 51: POWER RECEPTION COIL
- 52: LOAD CIRCUIT

## Claims

1. A power transmission device (3, 3a) for wirelessly transmitting power to a power reception device (5), the power transmission device comprising:
a first coil (33, 43) configured to emit a first electromagnetic wave to the power reception device (5); and
second correction coils (35) that are arranged at a position where a center axis of the first coil (33, 43) and each center axis of the second correction coils (35) do not overlap each other and the second correction coils are configured to emit a second electromagnetic wave having a strength distribution with a polarity opposite to a polarity of a strength distribution of the first electromagnetic wave and having a smaller electromagnetic strength than an electromagnetic strength of the first electromagnetic wave emitted by the first coil (33, 43).

2. The power transmission device (3, 3a) according to claim 1, further comprising:
at least one power supply (32, 34) configured to supply power to the first coil (33, 43) and the second correction coils (35); and
a phase control circuit (36) configured to generate a phase difference between a phase of a current output to the second correction coils (35) and a phase of a current output to the first coil (33, 43) so that an electromagnetic wave emitted by the first coil (33, 43) and an electromagnetic wave emitted by the second correction coils (35) have polarities opposite to each other, wherein
the power supply (32, 34) and the phase control circuit (36) are connected to each other.

3. The power transmission device (3, 3a) according to claim 2, wherein the phase control circuit (36) is configured to generate the phase difference of 180 degrees.

4. The power transmission device (3, 3a) according to claim 1, further comprising:
at least one power supply unit (32, 34) configured to supply power to the first coil (33, 43) and the second correction coils (35), wherein
a direction of a current flowing through the first coil (33, 43) is different from a direction of a current flowing through the second correction coils (35).

5. The power transmission device (3, 3a) according to claim 1, wherein the first coil (33, 43) and the second correction coils (35) are reversely wound to each other.

6. The power transmission device (3, 3a) according to any one of claims 1 to 5, wherein the second correction coils (35) are arranged at a position where a periphery of the first coil (33, 43) and the center axes of the second correction coils (35) overlap each other.

7. The power transmission device according to claim 1, further comprising:
a plurality of the first coils (43-1 to 43-n), wherein
the second correction coils (35) are arranged at a position where a periphery of outer coils being the first coils (43, 43a to 43d) positioned at an outermost location among the plurality of the first coils (43-1 to 43-n) and the center axes of the second correction coils (35) overlap each other.

## Patentansprüche

1. Eine Leistungsübertragungsvorrichtung (3, 3a) für eine drahtlose Übertragung einer Leistung an eine Leistungsempfangsvorrichtung (5), wobei die Leistungsübertragungsvorrichtung umfasst:
eine erste Spule (33, 43), ausgebildet zum Emittieren einer ersten elektromagnetischen Welle an die Leistungsempfangsvorrichtung (5); und
zweite Korrekturspulen (35), welche bei einer Position angeordnet sind, wobei eine Zentralachse der ersten Spule (33, 43) und jede Zentralachse der zweiten Korrekturspulen (35) sich nicht miteinander überschneiden, und die zweiten Korrekturspulen ausgebildet sind zum Emittieren einer zweiten elektromagnetischen Welle, welche eine Stärkeverteilung mit einer Polarität entgegengesetzt zu einer Polarität einer Stärkenverteilung der ersten elektromagnetischen Welle aufweist und eine kleinere elektromagnetische Stärke als eine elektromagnetische Stärke der ersten elektromagnetischen Welle aufweist, welche durch die erste Spule (33, 43) emittiert ist.

2. Leistungsübertragungsvorrichtung (3, 3a) gemäß Anspruch 1, weiter umfassend:
zumindest eine Energieversorgung (32, 34), ausgebildet zum Zuführen von Energie zu der ersten Spule (33, 43) und den zweiten Korrekturspulen (35); und
einen Phasensteuerschaltkreis (36), ausgebildet zum Erzeugen einer Phasendifferenz zwischen einer Phase einer Stromausgabe zu den zweiten Korrekturspulen (35) und einer Phase einer Stromausgabe zu der ersten Spule (33, 43) derart, dass eine durch die erste Spule (33, 43) emittierte elektromagnetische Welle und eine durch die zweiten Korrekturspulen (35) emittierte elektromagnetische Welle zueinander entgegengesetzte Polaritäten aufweisen, wobei
die Energieversorgung (32, 34) und der Phasen-Steuerschaltkreis (36) miteinander verbunden sind.

3. Leistungsübertragungsvorrichtung (3, 3a) gemäß Anspruch 2, wobei der Phasen-Steuerschaltkreis (36) ausgebildet ist zum Erzeugen der Phasendifferenz von 180 Grad.

4. Leistungsübertragungsvorrichtung (3, 3a) gemäß Anspruch 1, weiter umfassend:
zumindest eine Energieversorgungseinheit (32, 34), ausgebildet zum Zuführen von Energie zu der ersten Spule (33, 43) und den zweiten Korrekturspulen (35), wobei
eine Richtung eines durch die erste Spule (33, 43) fließenden Stroms unterschiedlich von einer Errichtung eines durch die zweiten Korrekturspulen (35) fließenden Stroms ist.

5. Leistungsübertragungsvorrichtung (3, 3a) gemäß Anspruch 1, wobei die erste Spule (33, 43) und die zweiten Korrekturspulen (35) umgekehrt zueinander gewickelt sind.

6. Leistungsübertragungsvorrichtung (3, 3a) gemäß einem der Ansprüche 1 bis 5, wobei die zweiten Korrekturspulen (35) bei einer Position angeordnet sind, wobei eine Peripherie der ersten Spule (33, 43) und die Zentralachsen der zweiten Korrekturspulen (35) sich miteinander überschneiden.

7. Leistungsübertragungsvorrichtung gemäß Anspruch 1, weiter umfassend:
eine Vielzahl der ersten Spulen (43-1 bis 43-n), wobei die zweiten Korrekturspulen (35) bei einer Position angeordnet sind, wobei eine Peripherie von äußeren Spulen, welche die an einer äußersten Position positionierten ersten Spulen (43, 43a bis 43d) aus der Vielzahl der ersten Spulen (43-1 bis 43-n) sind, und die Zentralachsen der zweiten Korrekturspulen (35) sich miteinander überschneiden.

## Revendications

1. Dispositif de transmission de courant (3, 3a) pour transmettre de manière sans fil un courant à un dispositif de réception de courant (5), le dispositif de transmission de courant comportant :
une première bobine (33, 43) configurée pour émettre une première onde électromagnétique au dispositif de réception de courant (5) ; et
des secondes bobines de correction (35) qui sont disposées en une position où un axe central de la première bobine (33, 43) et chaque axe central des secondes bobines de correction (35) ne se chevauchent pas et les secondes bobines de correction sont configurées pour émettre une seconde onde électromagnétique possédant une répartition de force avec une polarité opposée à une polarité d'une répartition de force de la première onde électromagnétique et possédant une force électromagnétique inférieure à une force électromagnétique de la première onde électromagnétique émise par la première bobine (33, 43).

2. Dispositif de transmission de courant (3, 3a) selon la revendication 1, comportant en outre :
au moins une alimentation électrique (32, 34) configurée pour délivrer du courant à la première bobine (33, 43) et aux secondes bobines de correction (35) ; et
un circuit de contrôle de phase (36) configuré pour générer une différence de phase entre une phase d'un courant délivré aux secondes bobines de correction (35) et une phase d'un courant délivré à la première bobine (33, 43) de sorte qu'une onde électromagnétique émise par la première bobine (33, 43) et une onde électromagnétique émise par les secondes bobines de correction (35) possèdent des polarités opposées, dans lequel
l'alimentation électrique (32, 34) et le circuit de contrôle de phase (36) sont reliés l'un à l'autre.

3. Dispositif de transmission de courant (3, 3a) selon la revendication 2, dans lequel le circuit de contrôle de phase (36) est configuré pour générer la différence de phase de 180 degrés.

4. Dispositif de transmission de courant (3, 3a) selon la revendication 1, comportant en outre :
au moins une unité d'alimentation électrique (32, 34) configurée pour délivrer du courant à la première bobine (33, 43) et aux secondes bobines de correction (35), dans lequel
une direction d'un courant circulant à travers la première bobine (33, 43) est différente d'une direction d'un courant circulant à travers les secondes bobines de correction (35).

5. Dispositif de transmission de courant (3, 3a) selon la revendication 1, dans lequel la première bobine (33, 43) et les secondes bobines de correction (35) sont enroulées inversement l'une par rapport à l'autre.

6. Dispositif de transmission de courant (3, 3a) selon l'une quelconque des revendications 1 à 5, dans lequel les secondes bobines de correction (35) sont disposées en une position où une périphérie de la première bobine (33, 43) et les axes centraux des secondes bobines de correction (35) se chevauchent.

7. Dispositif de transmission de courant selon la revendication 1, comportant en outre :
une pluralité de premières bobines (43-1 à 43-n), dans lequel les secondes bobines de correction (35) sont disposées en une position où une périphérie des bobines externes étant les premières bobines (43, 43a à 43d) positionnées en un endroit extérieur parmi la pluralité de premières bobines (43-1 à 43-n) et les axes centraux des secondes bobines de correction (35) se chevauchent.
